# EUROPEAN PATENT APPLICATION

(11) **EP 2 361 682 A1**
(43) Date of publication of application: **31.08.2011**
(21) Application number: 10001799.5
(22) Date of filing: 23.02.2010
(51) Int. Cl.: B01J 21/04, B01J 23/72, C01B 7/04

(54) **Catalyst for chlorine production**

(71) Applicant: Bayer MaterialScience AG, 51368 Leverkusen (DE)
(72) Inventor: Pérez-Ramirez, Javier Prof. Dr., 43007 Tarragona (ES); Gomez-Segura, Jordi, 08020 Barcelona (ES)

(57) **Abstract**

The subject of the present invention is a copper (I) aluminate-containing catalyst to be used for the stable production of chlorine from hydrogen chloride by thermocatalytic oxidation with oxygen-containing gases, wherein the preparation procedure of the catalyst comprises an annealing step to produce a copper (I) aluminate-containing catalyst in which at least 50 wt-% of the copper altogether present in the catalyst is present as copper (I).

## Description

The subject of the present invention is a copper (I) aluminate-containing catalyst to be used for the stable production of chlorine from hydrogen chloride by thermocatalytic oxidation with oxygen-containing gases, wherein the preparation procedure of the catalyst comprises an annealing step to produce a copper (I) aluminate-containing catalyst in which at least 50 wt-% of the copper altogether present in the catalyst is present as copper (I).

The process, developed by Deacon in 1868, of catalytic oxidation of hydrogen chloride with oxygen in an exothermic equilibrium reaction was at the beginning of industrial chlorine chemistry:

4 HCl + O₂ → 2 Cl₂+2 H₂O

However, the Deacon process was pushed severely into the background by chlor-alkali electrolysis. Virtually the entire production of chlorine was by electrolysis of aqueous sodium chloride solutions (Ullmann's Encyclopedia of Industrial Chemistry, seventh release, 2006). However, the attractiveness of the Deacon process has recently been increasing again, since worldwide demand for chlorine is growing faster than the demand for sodium hydroxide solution. The process for the preparation of chlorine by oxidation of hydrogen chloride, which is unconnected with the preparation of sodium hydroxide solution, satisfies this development. Furthermore, hydrogen chloride is obtained as a linked product in large quantities, for example, in phosgenation reactions, as in the preparation of isocyanates.

For industrial application the HCl oxidation catalyst should be characterized by a sufficient working life (several years) and thus a sufficient stability. Despite wide activities in the field of applying copper-based catalysts in the Deacon reaction, the developed copper-based catalysts either have high activity but low stability and hence a short working life *or* high stability and hence a long working life but low activity.

GB 1 362 638 A describes catalyst compositions which are prepared by dry mixing of an anhydrous cupric halide with an activated alumina and heating the mixture at 300 ―600 °C. The person skilled in the art expects that by applying the mentioned annealing temperature the obtained copper-based catalyst compositions will be dominated by a highly active but unstable Cu(II) phase and thus a very restricted lifetime under typical HCl oxidation conditions.

DE 10 2005 040 286 A1 describes a catalyst for gas phase reaction with high mechanical stability, which comprises active metals on a carrier comprising aluminum oxide, preferably alpha aluminum oxide, the active metal being ruthenium (preferred), copper and/or gold. The described catalyst can be used for the catalytic oxidation of hydrogen chloride with oxygen to chlorine above 300 °C. The primary intention of this invention is related to the mechanical properties of the carrier.

SU 19701478688 A1 describes a spinel-type compound of formula Me⁺²(Me⁺³)₂O₄ where M⁺² is Cu, Fe, Cr, Co or Ni and Me⁺³ is Al, Cr or Fe, which is characterized by high stability and thus long working life under typical HCl oxidation conditions. The person skilled in the art expects that a spinel-type catalyst will be characterized by a high stability and thus long working life but the activity of the pure, crystalline spinel phase as introduced by the inventors is very low, mainly due to its low exposed surface.

Oxychlorination catalysts composed of active base metals generally cannot withstand long-term use in the catalytic oxidation reaction of hydrogen chloride by conventional synthesis methods due to the volatilization of the catalytically active components and/or the eventual catalyst coagulation. For instance, alumina-supported copper systems and unsupported copper aluminum oxide inherently form single oxide impurities of unreacted CuO and Al₂O₃ by conventional synthesis methods. Copper-bearing crystallites exposed to gaseous water are prone to coagulating leading to the loss of activity. As the water-containing process gas contacts the oxidized catalyst surface, hydrogen-bonded surface hydroxyls remain strongly adsorbed on the oxidized surface of the copper oxide crystallites, so that the catalyst does not function any more.

Many ruthenium-based catalyst systems have been developed as well; see for example DE-OS-1 567 788 (RuCl₃/SiO₂), EP 0 743 277 A1 (RuO₂/TiO₂) and EP 2 026 905 A1 (RuCl₃/SnO₂). Although ruthenium-based catalysts show beneficial properties such as a reasonable long-term activity, their use on a large industrial scale suffers from an economic perspective from the very high price of ruthenium. Hence, the development of ruthenium-free catalysts with high performance is highly desirable. Among the ruthenium-free catalysts known to date, the copper-based systems are the most promising ones.

Thus the development objective of this invention is a copper-based, ruthenium-free catalyst, which exhibits a sufficient and highly stable activity, i.e. which is not prone to excessive volatilization of the catalytic components and/or catalyst coagulation. The present invention fulfils the aforementioned requirements and thus overcomes the known disadvantages of state-of-the-art copper-based systems.

As used herein, the singular terms "a" and "the" are synonymous and used interchangeably with "one or more." Accordingly, for example, reference to "a compound" herein or in the appended claims can refer to a single compound or more than one compound.

The subject of the present invention is a ruthenium-free catalyst to be used for the production of chlorine from hydrogen chloride by thermocatalytic oxidation with oxygen-containing gases, wherein the catalyst is based on copper compounds and is prepared by mixing of a copper species and an aluminum species and subjecting the mixture to at least one annealing step in an oxygen-containing gas such that after the annealing step(s) a copper (I) aluminate-containing catalyst is produced in which at least 50 wt-% of the copper altogether present in the catalyst is present as copper (I).

More particularly, the subject of the present invention is a process for the production of chlorine in a reactor by oxidation of hydrogen chloride with an oxygen-containing gas in the presence of said catalyst.

The copper species is preferably selected from the group consisting of copper nitrate, copper halides (particularly preferred is copper chloride), copper oxide, copper acetate, copper sulfate, copper acetylacetonate, copper carbonate or copper alkoxides, wherein copper is in any chemically conceivable oxidation state, preferably (I) or (II), particularly preferably (II). The aluminum species is preferably selected from the group consisting of aluminum chloride, aluminum nitrate, aluminum oxide, aluminum alkoxides, boehmite or kaolin, wherein aluminum is in the oxidation state (III).

The annealing procedure to be described in more detail below preferably comprises a maximum of 3 annealing steps, each of which is carried out for 0.2 h to 10 h at temperatures of from 900 °C to 1200 °C. These parameters may differ between individual annealing steps. The phrase "after the annealing step(s)" used in this invention always refers to a point of time after the *last* annealing step.

The percentage by weight of copper (I) is calculated with respect to the total weight of copper altogether present in the catalyst after the annealing step(s). Herein, the total weight of copper refers to the sum of copper atoms Cu (0) (if present at all) and all conceivable copper ions. This content of copper (I) as well as the crystal structure of the copper faces in the catalyst are preferably determined by X-ray diffraction (XRD) and X-ray absorption fine structure analysis (XAFS). The copper (I) aluminate (CuAlO₂) is preferably of delafossite structure (see more detailed description below) and is particularly preferably phase pure without indications of secondary phases.

Optionally, the catalyst can be activated before the actual chlorine production is started. Activation procedures can comprise for example treatment in an HCl and oxygen-containing gas. The activation procedure is preferably carried out in the reactor used for chlorine production. The preferred activation procedure comprises a treatment in an HCl and oxygen-containing gas under conditions similar to, but not identical to, those of the actual chlorine production cycle under standard operating conditions. The activation procedure may simply be the *start-up phase* of chlorine production, the conditions of which usually differ to some extent from standard operating conditions under the usual load of HCl. Activation is preferably carried out at temperatures of from 200 °C to 600 °C by applying a gas flow with a superficial velocity of 1 cm/s to 2 m/s, which contains at least oxygen and hydrogen chloride in a molar ratio of oxygen to hydrogen chloride of from 0.25 to 10.

Preferably, the copper (I) aluminate present in the catalyst after the annealing step(s) is of delafossite structure. A high purity of the copper (I) aluminate (CuAlO₂) delafossite phase is preferred in order to ensure a stable activity of the catalyst under production conditions. The term "delafossite phase" is used herein as defined in *"*Delafossite-type copper oxides and their derived phases: a review of structure and physical properties " by Isawa, K. from Oxide Thermoelectrics (2002), 213 - 234*.* In case of uncombined CuO as an impurity, e.g., the catalyst tends to coagulate under production conditions, which goes along with activity deterioration. Preferably the catalyst exhibits a sufficient surface area, preferably targeted by preparation of nano-sized crystallites, which goes along with a sufficient activity level of the working catalyst.

Preferred synthesis methods combine an intimate mixing of cation species (phase purity) and a low synthesis temperature (nano-sizing). Preferred (laboratory) synthesis methods to meet these requirements are gel technology techniques or wet complexation methods, particularly preferably by using citric acid as a complexant and particularly sol-gel combustion techniques by using citrate precursors. Citrate reduces the diffusive distance of linked metal cations in solid-state reaction by a reaction product of metal oxides upon thermal decomposition. The lowering of the reaction temperature for the decomposition of citric acid accounts for the autocatalytic anionic redox reaction between citrate ions and the oxidizing nitrates of metal nitrates. The increased diffusion rates in the non-stoichiometric mixture, on the basis of doping and/or defect levels in ceramic samples of nominally undoped CuAlO₂, permits single phase formation of nano-sized crystalline powders at low temperature, e.g. in comparison to conventional solid-state synthesis methods.

To meet the requirements of nanocrystallinity and phase purity, short annealing periods (preferably from 0.2 to 10 h, particularly preferably from 0.2 to 2 h at temperatures from 900 °C to 1200 °C are chosen, preferably from 1000 °C to 1200 °C. Preferably, the thermal annealing procedure is repeated if the sample does not exhibit a phase pure delafossite X-ray diffraction pattern (XRD) and X-ray absorption fine structure (XAFS), so that the copper (I) aluminate present in the catalyst after the annealing step(s) is the only Cu-bearing phase detectable by X-ray diffraction and X-ray absorption fine structure analysis. Generally, not more than a maximum of 3 annealing steps are required to achieve this. However, preferably only one annealing step is sufficient.

Preferably XRD investigations are carried out at a X'Pert PRO MRD diffractometer (Cu Kα radiation and a flat graphite monochromator). The measurements are preferably carried out in the 2θ angle range 10° ― 90° with a step of 0.1° and a voltage and current of 40 kV and 40 mA, respectively. The patterns are preferably compared with the ICSD reference data for phase identification. Average crystallite size of phases are preferably calculated by the line broadening analysis according to the Scherrer equation.

X-ray absorption fine structure (XAFS) spectra of the Cu―K edge is preferably obtained with an electron beam energy of 2 GeV and an average stored current of 90 mA as the source of radiation. The X-ray energy is preferably monitored with a channel cut Si (111) monochromator and recorded under transmission mode using two ionization chambers as detectors. EXAFS (extended X-ray absorption fine structure) and XANES (X-ray absorption near the edge structure) spectra are preferably recorded with steps 1.5 eV and 0.3 eV, respectively. The samples are preferably prepared in the form of pellets to obtain the absorption jump at the Cu-K edge 0.5 with crystalline compounds as reference samples. For EXAFS radial distribution function of the atoms are preferably calculated by Fourier transforming of the k3-weighted experimental χ(k) function and curve fitting with EXCURV92 code to determine the distances and coordination numbers. The quality of simulation is preferably estimated from discrepancy factor between the experimental and simulation data (R-factor).

The oxygen content in the annealing atmosphere affects the phase evolution process. Thermal annealing is preferably conducted in an oxygen-containing gas, which does preferably contain no hydrogen chloride, particularly preferably in air. Pure oxygen facilitates the CuAl₂O₄ phase formation and is thus not preferred. Thermal annealing in gases comprising no oxygen or under vacuum is not preferred, since the formation of CuAlO₂ is complicated or even suppressed. The catalyst is preferably quench-cooled after thermal annealing. Quenching prevents unwanted phase transformation of pure CuAlO₂ in air to form undesirable secondary species. (CuAlO₂ is thermodynamically unstable in air with respect to oxidation to CuAl₂O₄/CuO (∼1000 ―600 °C) and to CuO/Al₂O₃ below about 600 °C.) With the intention of minimizing the residual stresses of samples during and after quenching, a silicon compound is preferably added, particularly preferably in the form of SiO₂ capable of forming glass in the CuO-Al₂O₃-SiO₂ system with a very low thermal expansion coefficient. Preferably, the SiO₂ is added during the preparation of the catalyst before any annealing step is carried out.

It is obvious to the person skilled in the art that a catalyst is prone to undergo structural changes during activation (if applicable) and/or production. The requirements as to the Cu (I) content and phase purity specified above refer to the catalyst in its state after finalizing the actual catalyst preparation procedure (the *"as-prepared catalyst*") before activation (if applicable) or the begin of production. The catalyst actually present in the reactor after activation (if applicable) and/or some time of production (usually after approximately 1 h significant structural changes occur) is called the *"working catalyst".* Unless indicated otherwise, the term "catalyst" used in this invention refers to the "as-prepared" catalyst.

Under reaction-like conditions, the as-prepared CuAlO₂ phase generates CuO *embedded in a spinel-like CuAl₂O₄ environment* by the oxidative thermal decomposition reaction:

2 CuAlO₂ + ½ O₂ → CuO + CuAl₂O₄.

The actual nature of the copper oxide crystallites begins to change and copper chlorides start to crystallize in a spinel-like CuAl₂O₄ environment, *thereby preventing the eventual catalyst coagulation that is characteristic of CuO which is not embedded in a spinel-like CuAl₂O₄ environment.* The copper chlorides form a condensation polymer that satisfies the Lewis acid/base reactions and ionization reactions using the lone electron pairs of water molecules, the chlorides of other CuCl₂ species, and the chlorides of HCl by ligand displacement reactions. Thus, the working catalyst obtained from the as-prepared catalyst according to the invention is characterized by high stability and long working life compared to the catalysts of the state of the art. This results in longer reactor run times and huge economic savings.

The CuAlO₂ catalyst is preferably diluted with Al₂O₃ producing a diluted catalyst in order to obtain an excess of aluminum in the system, thereby facilitating the oxidative degradation of the sample during activation (if applicable) and reaction due to defect incorporation. In this preferred variant of the catalyst, the diluting compound Al₂O₃ is present in the diluted catalyst in a weight ratio of 2 : 1 to 1 : 20 in respect to the CuAlO₂ present in the diluted catalyst. The dilution is preferably carried out during the preparation process of the CuAlO₂ system. Particularly preferred, the Al₂O₃ is added to the catalyst before any annealing step(s) is/are carried out.

Preferably, alkali metals compounds and/or earth alkali metal compounds and/or rare earth metal compounds are added as promoters during the preparation of the catalyst. Preferred are lanthanum halides, potassium halides and lithium halides or mixtures thereof; particularly preferred is lithium chloride. Preferably, the metal content is 7 wt % or less with respect to the total weight of the annealed sample. Preferably, these components are added after a first annealing step of the catalyst by impregnation with an aqueous solution containing the precursor compounds. Preferably, the such impregnated catalyst thereafter is evacuated at 70 °C and re-calcined above 200 °C.

Optionally, Al in CuAlO₂ is partly substituted by other trivalent metals to form a solid solution CuAl_{l-y}Me_{y}O₂ (0 < y < 1) (Me = Cr, La, Ga, In, Co, Fe) as the as-prepared catalyst, preferably with delafossite structure. A solid solution in this context is defined as a substitution of atoms in the CuAlO₂ phase without the formation of secondary phases.

Another particular preferred catalyst is characterized in that the catalytically active component is present on a carrier, in particular on a carrier on the basis of carrier material selected from one or more of the group: silicon dioxide, graphite, titanium dioxide with rutile or anatase structures, tin dioxide, zirconium dioxide, aluminum oxide, particularly α-, γ- or δ-aluminum oxide or mixtures of these carrier materials. To achieve this, the copper and the aluminum species used in the preparation of the catalyst are either mixed in the presence of a carrier material or the copper and the aluminum species are first pre-mixed and then contacted with a carrier material such that the catalyst is supported on said carrier material. Details as to the techniques how to support catalytically active compounds on carrier materials are well known to the person skilled in the art.

A further preferred variant of the catalyst is characterized in that the catalyst is pressed to form a shaped body, wherein the diameter or maximum cross section or width of the catalyst body is from 0.3 mm to 7 mm, preferably 0.8 mm to 5 mm on average. Preferably, the shaped body is formed after the anneling step(s) is/are completed.

Suitable catalyst shaped bodies are shaped bodies of any desired shapes; tablets, rings, cylinders, stars, wagon wheels or balls are preferred, and rings, cylinders, balls or star strands are particularly preferred as the shape. The ball shape is preferred. The size of the catalyst shaped bodies, e.g. diameter in the case of balls or maximum cross-sectional width, is on average in particular 0.3 mm to 7 mm, very preferably 0.8 mm to 5 mm.

Alternatively to the finely divided catalyst (shaped) bodies described above, the support can also be a monolith. In addition to the "classic" support body with parallel channels not connected radially to one another, the term "monolith" in this context also includes foams, sponges or the like having three-dimensional connections within the support body, as well as support bodies with cross-flow channels. The monolithic support can have a honeycomb structure, and also an open or closed cross-channel structure. The monolithic support has a preferred cell density of from 100 cpsi to 900 cpsi (cells per square inch), particularly preferably from 200 cpsi to 600 cpsi. A monolith in the context of the present invention is disclosed e.g. in "Monoliths in multiphase catalytic processes-aspects and prospects" by F. Kapteijn, J. J. Heiszwolf T. A. Nijhuis and J. A. Moulijn, Cattech 3, 1999, p. 24.

The process for the production of chlorine catalyzed by the catalyst according to the invention is carried out as known to the person skilled in art. In particular, the following conditions are preferred:
Since the HCl oxidation is an equilibrium reaction, it is expedient to work at the lowest possible temperatures at which the catalyst still has a sufficiently high activity. It is furthermore expedient to employ oxygen in amounts in excess of the stochiometric amounts with respect to hydrogen chloride. For example, a two- to four-fold oxygen excess is conventional. Since no losses in selectivity are to be feared, it may be economically advantageous to operate under a relatively high pressure and accordingly with a longer residence time compared with normal pressure.

The catalytic oxidation of hydrogen chloride can preferably be carried out adiabatically or isothermally or approximately isothermally, discontinuously, but preferably continuously, as a fluidized or fixed bed process, preferably as a fixed bed process, particularly preferably in tube bundle reactors over heterogeneous catalysts at a reactor temperature of from 180 °C to 500 °C, preferably 200 °C to 450 °C, particularly preferably 250 °C to 450 °C, under an absolute pressure of from 1 bar to 25 bar (1,000 hPa to 25,000 hPa), preferably 1.2 bar to 20 bar, particularly preferably 1.5 bar to 17 bar and especially preferably 2.0 bar to 15 bar.

Conventional reaction apparatuses in which the catalytic oxidation of hydrogen chloride is carried out are fixed bed or fluidized bed reactors. The catalytic oxidation of hydrogen chloride can also preferably be carried out in several stages.

In the adiabatic and the isothermal or approximately isothermal procedure, several, that is to say 2 to 10, preferably 2 to 6, particularly preferably 2 to 5, in particular 2 to 3 reactors connected in series with intermediate cooling can be employed. The hydrogen chloride either can all be added together with the oxygen before the first reactor, or can be distributed over the various reactors. This connection of individual reactors in series can also be combined in one apparatus.

The conversion of hydrogen chloride in a single pass can preferably be limited to 15 % to 90 %, preferably 40 % to 90 %, particularly preferably 60 % to 90 %. Some or all of the unreacted hydrogen chloride, after being separated off, can be recycled into the catalytic oxidation of hydrogen chloride. The volume ratio of hydrogen chloride to oxygen at the reactor intake is preferably 1 : 10 to 20 : 1, preferably 1 : 10 to 8 : 1, particularly preferably 1 : 5 to 2 : 1.

The heat of reaction of the catalytic oxidation of hydrogen chloride can be utilized in an advantageous manner for generating steam. This can be utilized for operation of a phosgenation reactor and/or of distillation columns, in particular of isocyanate distillation columns.

In a further step, the chlorine formed is separated off. The separating off step conventionally comprises several stages, namely separating off and optionally recycling of unreacted hydrogen chloride from the product gas stream of the catalytic oxidation of hydrogen chloride, drying of the stream obtained, comprising substantially chlorine and oxygen, and separating off chlorine from the dried stream.

Unreacted hydrogen chloride and the water vapour formed can be separated off by condensing aqueous hydrochloric acid out of the product gas stream of the hydrogen chloride oxidation by cooling. Hydrogen chloride can also be absorbed in dilute hydrochloric acid or water.

For a more complete description of various preferred embodiments of a HCl oxidation process it is referred to several other published patent applications (e.g. US 2007/0274901 A1**,** US 2007/0277551 A1**).**

In the following sections preferred synthesis routes for the catalyst are described. Since experiments are conducted in laboratory scale, the description of the synthesis procedures is laboratory-like. It is obvious to the person skilled in the art that some of the procedures have to be adapted to industrial scale procedures before production on a large scale can be carried out economically. Such adaptation processes are well-known to the person skilled in the art and hence do not state a deviation from the subject matter of the present invention.

A preferred embodiment of the invention is a synthesis based on **solid-state reactions**. Starting point is a 1 : 1 mixture of Cu₂O and Al₂O₃ or a stoichiometric mixture of CuO and Al₂O₃ (molar ratio of CuO to Al₂O₃ = 2), Preferably high-purity constituent dry oxides are applied, which are mixed intimately. Preferably the metal oxides are prepared by dissolving the nitrates of copper and aluminum in deionised water, reducing the solution by evaporation, co-precipitating the Al and Cu by using excess of ammonia, evaporating to dryness at 60 - 70 °C with stirring, grinding and drying, e.g. in air at 100 °C for 12 h. The mixtures thus obtained are preferably pressed to form pellets. The pellets are thermally annealed above 900 °C, preferably above 1000 °C and particularly preferably from 1000 °C to 1200 °C. Thermal annealing above 900 °C should be applied to prevent phase transformation of Cu₂O into CuO and promote the formation of CuAlO₂ by solid-state reaction, i.e., Cu₂O + Al₂O₃ → 2 CuAlO₂. In case of direct reaction of a stoichiometric mixture of Cu₂O and Al₂O₃ the time of thermal annealing is preferably in the range of 4 h― 10 h at 1100 °C, in case of Al₂O₃ and CuO the time of thermal annealing preferably has to be prolonged to 24 h― 36 h at 1100 °C. The stability of the CuAlO₂ phase is limited by decomposing to CuAl₂O₄ and CuO, i.e., 8 CuAlO₂ + O₂ → 4 CuAlO₄ + 2CuO below about 1000 °C. Thus the samples are preferably quench-cooled to room temperature, particularly preferably as fast as possible using (cold) water or even liquid nitrogen. Delafossite-like compounds AB^{III}O₂ (where A = Cu; B = Cr, La, Ga, In, Co, Fe) can be obtained in a similar fashion.

Another preferred embodiment of the invention is a synthesis based on the **chemical sol-gel process**. A colloidal dispersion of pseudo-boehmite powder in water with chemical composition corresponding to Al₂O₃-H₂O or AlO(OH) is preferably used as a precursor component. Herein the term "boehmite" is to be understood as discussed in *"*CuAl2O4 formation and its effect on α-Al2O3 phase evolution on calcination of metal ion doped boehmite xerogels" by James, Tomy; Padmanabhan, M.; Warrier, K G. K.; Sugunan, S. from Materials Chemistry and Physics (2007), 103 (2―3), 248 ― 254*.*

Preferably the boehmite sol contains 0.15 g ―0.20 g Al₂O₃ equivalent per mL. The boehmite sol is preferably peptized with nitric acid in the pH range 3 - 3.5. Preferably the required amounts of the nitrates of copper and aluminum are then added as aqueous solutions. The precursor sol is preferably gelated using ammonia in the pH range 5 ― 7. Excess water is preferably evaporated at 50 ― 70 °C until gelation. The wet gel obtained from a boehmite sol is preferably dried at 70 ― 80 °C for at least 12 h to form a xerogel. The xerogel is thermally annealed above 900 °C, preferably above 1000 °C and particularly preferably from 1000 °C to 1200 °C for at least 1 - 5 h. The annealed samples are preferably quenched in air, preferably as fast as possible using (cold) water or liquid nitrogen.

Yet another preferred embodiment of the invention is another synthesis based on the chemical sol-gel process, which is preferably applied for the preparation of samples in the Cu₂O(CuO)-Al₂O₃-SiO₂ ternary system. The Cu, Al, and Si concentrations (mol fraction x) in terms of those in their oxides Cu₂(CuO)-Al₂O₃-SiO₂ are preferably adjusted to a phase region boundary delimited by the mole fractions x[Cu₂O(2CuO)] = 0.4 - 0.67, x[SiO_{2]} = 0 ― 0.4, and x[Al₂O₃] = 0.2 - 0.33 targeting a delafossite phase (Cu₂O·Al₂O₃), which preferably is diluted by SiO₂, or to a phase region boundary delimited by the mole fractions x[Cu₂O(2CuO)] = 0 ― 0.5, x[SiO₂] = 0 ― 0.4, and x[Al₂O₃] = 0.3 ― 1, targeting a delafossite (Cu₂O.Al₂O₃) phase, which is diluted by corundum (α-Al₂O₃) and preferably diluted by SiO₂. Preferred starting materials are gels of appropriate composition made of the alcoholic solution of tetraethoxysilane, Si(OC₂H₅)₄ (TEOS) and hydrates of aluminum and copper salt with HCl or HNO₃. The alcoholic solution is preferably methanol, ethanol or 1-propanol. In case of the Si comprising precursor gel, the range of molar ratios employed is preferably TEOS : solvent: H₂O : catalyst = 1 : 0 - 4 : 4 - 20 : 0.01 ― 0.03. TEOS is preferably hydrolyzed in the range comprising 50 °C ― 60 °C. At this temperature, an initially biphasic system of the partially hydrolyzed species Si(OC₂H₅)₄₋ₓ(OH)ₓ that is water soluble is transformed into a clear, one-phase solution. Thereafter the aluminum and copper-containing solutions are preferably added at room temperature. The solution is preferably kept at room temperature for gelation for at least 24 h before drying. The gel system is preferably dried by heating the sol solution at 50 ― 60 °C for at least 12 h, and subsequent vaporization is carried out at 80 - 90 °C in air, the temperature preferably being held for 1 - 12 h. The gel is thermally annealed above 900 °C, preferably above 1000 °C and particularly preferably from 1000 °C to 1200 °C. The thermal annealing is preferably conducted in air for 1 ― 5 h. The samples are preferably quench-cooled to room temperature, particularly preferably by using (cold) water or even liquid nitrogen.

Yet another preferred embodiment of the invention is a method based on **wet complexation and gel formation by using citrate precursors.** Preferably standardized solutions ranging from 0.1 mol · L⁻¹ to 1 mol · L⁻¹ containing stoichiometric amounts of metal nitrate stock aqueous solutions are mixed with citric acid at room temperature. Preferably the molar ratio of citric acid to total cations ranges from 0.8 to 2. A citric acid monohydrate solution in water or a mixture of citric acid monohydrate (preferably 60 wt % in water) and ethylene glycol (preferably 40 wt % in water) are preferably added. Preferably the solution is neutralized by adding ammonia. Preferably the precursor solution as made by the wet complexation route is evaporated to dryness and gradually solidified by heating in air to 120 ― 160 °C and held until dryness. The foamy compound thus obtained is preferably ground into a powder. The powder is preferably burnt out in the 160 ― 250 °C temperature range. Thereafter the sample is thermally annealed above 900 °C, preferably above 1000 °C, particularly preferably at 1000 ― 1200 °C. The thermal annealing is preferably conducted in air for 1 - 5 h. The samples are preferably quench-cooled to room temperature, particularly preferably by using (cold) water or even liquid nitrogen.

Lastly, another preferred embodiment of the invention is a method based on citric acid gel technology. Preferably citric acid together with the required amounts of hydrates of the cation nitrates is mixed in a small water quantity. The molar ratio of citric acid to the metals is preferably in the range of 0.7 up to 1. The hydrolyzation and chelation is preferably conducted at 50 ― 70°C. The pH value is preferably adjusted in the range of 2 - 3 by addition of concentrated ammonia solution. The gel thus formed is concentrated preferably at 50 - 70 °C. Preferably the gel is burnt out by increasing the temperature to 200 - 300 °C. Thereafter the sample is thermally annealed. above 900 °C, preferably above 1000 °C and particularly preferably in the range of 1000 °C - 1200 °C. The thermal annealing is preferably conducted in air for 1 ―5h. Preferably the samples thereafter are quench-cooled to room temperature.

### Examples

### Example 1 (example according to the invention): Catalysts based on solid state synthesis (i) and citric acid combustion technique (ii)

(i) A solution of the required stoichiometry was prepared by dissolving the hydrated nitrates of copper (II) and aluminum (III) in deionised water, reducing the solution by evaporation, and co-precipitating the Al and Cu using excess of ammonia. The whole slurry was evaporated to dryness at 70 °C with stirring and ground. The wet sample was dried in air at 100 °C for 12 h. The mixture thus obtained was pressed to form pellets. The pellets were heated in air (annealing step) to 1100 °C and held there for 5 h. Thereafter the sample was quench-cooled in liquid nitrogen and than ground to a fine powder.
(ii) Citric acid together with the required amounts of hydrates of the nitrates of copper and aluminum was mixed in a small water quantity, less than 20 cm³ with respect to 240 mmol of citric acid, and a molar ratio of citric acid to the sum of the metals of 1. The hydrolyzation and chelation was conducted at 70 °C. The pH value was adjusted to 2 by addition of concentrated ammonia solution. The gel thus formed was concentrated at 70 °C. By increasing the temperature 250 °C the gel was burnt out. Thereafter the sample was thermally annealed in air at 1100 °C for 3 h. The sample was quench-cooled to room temperature with liquid nitrogen.
(iii) The catalyst samples thus obtained were used in an isothermal chlorine production process. Thereby the temperature was set to 380 °C, the catalyst amount was set to 0.2 g and the gas flow was adjusted to 10 L/h (volume ratio of HCl/O₂/N₂ = 1/2/7). The results are shown in Table 1:

**Table 1: STY of catalysts 1i and 1ii.**

| **TOS [h]** | **STY of (1i)** [**g**_{C12}/(g_{catalyst} ·**h**)] | **STY of (1ii)** [**g**_{C12}/(g_{catalyst} **·h**)] |
|---|---|---|
| 2 | 1.03 | 0.98 |
| 29 | 1.19 | 1.15 |
| 55 | 1.33 | 1.26 |
| 127 | 1.44 | 1.28 |
| 151 | 1.44 | 1.26 |
| 175 | 1.52 | 1.27 |
| 199 | 1.57 | 1.30 |
| 347 | 1.65 | 1.17 |

| | | |
|---|---|---|
| TOS = time on stream; STY = space time yield. | | |

As one can see, no loss in space time yield is observed with the catalysts according to the invention. On the contrary, after an initial period an *increase* of space time yield is observed.

### Example 2 (comparison example): Catalyst based on a state-of-the-art synthesis

Catalyst samples were prepared by a state-of-the-art method which is based on incipient wetness. For the preparation of the catalyst samples, aluminum oxide powder (µ-phase) was placed into basins. Aqueous solutions of copper nitrate were added dropwise to the alumina oxide powder, until the pores were filled. The wet catalyst samples were dried at 100 °C for 24 h at reduced pressure (100 mbar absolute). The dried catalyst samples were heated to 500 °C with a heating rate of 2 K/min, held for 5 h at 500 °C and thereafter cooled to room temperature inside the furnace. The copper loading was varied (Cu-content based on CuO/Al₂O₃): 7.5 wt % (example 2i), 12.5 wt % (example 2ii).

The catalyst samples thus obtained were used in an isothermal chlorine production process. Thereby the temperature was set to 420 °C (temperature raise was necessary to reach a similar averaged space-time-yield-level as in example 1), the catalyst amount was set to 0.5 g and the gas flow was adjusted to 10 L/h (volume ratio of HCl/O₂/N₂ = 2/4/4). The results are shown in Table 2:

**Table 2: STY of catalysts 2i and 2ii.**

| **TOS [h]** | **STY of (2i)** [**g**_{C12}/(g_{catalyst} ·**h**)] | **TOS [h]** | **STY of (2ii)** [**g**_{C12}/(g_{catalyst} · **h**)] |
|---|---|---|---|
| 2.5 | 1.93 | 0.8 | 3.01 |
| 17.8 | 1.70 | 18.0 | 2.24 |
| 19.3 | 1.54 | 19.5 | 2.13 |
| 21.5 | 1.41 | 21.8 | 2.02 |
| 24.3 | 1.32 | 24.4 | 1.85 |
| 41.6 | 0.92 | 41.8 | 1.17 |
| 44.3 | 0.80 | 44.5 | 1.08 |

| | | | |
|---|---|---|---|
| TOS = time on stream; STY = space time yield. | | | |

Accompanied by a huge copper loss (as can be seen from decolorization of the sample and the depositing of copper in a colder zone of the reactor) the calculated space time yield dropped for both catalyst samples linearly from almost 2 g_{C12}/(g_{catalyst} · h) (example 2i) and 3 g_{C12}/(g_{catalyst} · h) (example 2ii), respectively, to less than 1 g_{C12}/(g_{catalyst} ·h) (example 2i) and about 1 g_{C12}/(g_{catalyst} · h) (example 2ii), respectively, after 44 h time on stream. This experiment points out that uncombined (highly dispersed) CuO on the catalyst surface, which is obtained by the applied preparation method, is prone to volatilization and coagulation and hence has an inferior catalytic performance compared to the catalyst according to the invention.

## Claims

1. Process for the production of chlorine by oxidation of hydrogen chloride with an oxygen-containing gas in the presence of a catalyst in a reactor, wherein the catalyst is prepared by mixing of a copper species and an aluminum species and subjecting the mixture to at least one annealing step in an oxygen-containing gas such that after the annealing step(s) a copper (I) aluminate-containing catalyst is produced in which at least 50 wt-% of the copper altogether present in the catalyst is present as copper (I).

2. Process according to claim 1, wherein the copper species is selected from the group consisting of copper nitrate, copper halides, copper oxide, copper acetate, copper sulfate, copper acetylacetonate, copper carbonate or copper alkoxides and the aluminum species is selected from the group consisting of aluminum chloride, aluminum nitrate, aluminum oxide, aluminum alkoxides, boehmite or kaolin.

3. Process according to claim 1 or 2, wherein the annealing step(s) is/are carried out in an oxygen-containing gas for 0.2 h to 10 h at temperatures of from 900 °C to 1200 °C.

4. Process according to one of claims 1 to 3, wherein the copper (I) aluminate present in the catalyst after the annealing step(s) is the only Cu-bearing phase detectable by X-ray diffraction and X-ray absorption fine structure analysis.

5. Process according to claim 4, wherein the copper (I) aluminate present in the catalyst-after the annealing step(s) is of delafossite structure.

6. Process according to claim 5, wherein Al₂O₃ is added as a diluting compound to the catalyst before any annealing step(s) is/are carried out.

7. Process according to claim 6, wherein the diluting compound Al₂O₃ is added such that it is present in the diluted catalyst in a weight ratio of 2 : 1 to 1 : 20 with respect to the copper (I) aluminate present in the diluted catalyst.

8. Process according to one of claims 1 to 7, wherein SiO₂ is added during the preparation of the catalyst before any annealing step is carried out.

9. Process according to one of claims 1 to 8, wherein alkali metal compounds and/or earth alkali metal compounds and/or rare earth metal compounds are added as promoters during the preparation of the catalyst.

10. Process according to claim 9, wherein the promoter is a lanthanum halide, a potassium halide or a lithium halide or a mixture thereof.

11. Process according to one of claims 1 to 10, wherein the copper and the aluminum species are mixed in the presence of a carrier material or wherein the copper and the aluminum species are first pre-mixed and then contacted with a carrier material such that the catalyst is supported on said carrier material and wherein said carrier material is selected from one or more of the group: silicon dioxide, graphite, titanium dioxide with rutile or anatase structures, tin dioxide, zirconium dioxide, aluminum oxide, particularly α-, γ- or δ-aluminum oxide, or mixtures of these carrier materials.

12. Process according to one of claims 1 to 11, wherein the catalyst is pressed to form a shaped body, wherein the average diameter or average maximum cross section or average width of the catalyst shaped body is from 0.3 mm to 7 mm.

13. Process according to one of claims 1 to 12, wherein the production of chlorine is carried out at a reactor temperature of from 180 °C to 500 °C and an absolute pressure of from 1 bar to 25 bar.
